# EUROPEAN PATENT SPECIFICATION

(11) **EP 3 355 709 B1**
(45) Date of publication and mention of the grant of the patent: **21.02.2024**
(21) Application number: 16781960.6
(22) Date of filing: 30.09.2016
(51) Int. Cl.: A23G 4/10

(54) **CHEWING GUMS CONTAINING ALLULOSE**
KAUGUMMIS MIT ALLULOSE
GOMMES À MÂCHER CONTENANT DE L'ALLULOSE

(30) Priority: 02.10.2015 US 201562236430 P
(43) Date of publication of application: 08.08.2018
(73) Proprietor: Wm. Wrigley Jr. Company, Chicago, IL 60642 (US)
(72) Inventor: BARKALOW, David G., Chicago, Illinois 60642 (US); HSU, Chia-Hua, Chicago, Illinois 60642 (US); HASELEU, Andrea, Chicago, Illinois 60642 (US)
(74) Representative: Haseltine Lake Kempner LLP
(86) International application number: PCT/US2016/055006
(87) International publication number: WO 2017/059363

(56) References cited:
- EP-A1- 2 098 227
- WO-A1-2015/075473
- WO-A1-2016/001586
- WO-A1-2016/156117
- US-A1- 2007 116 800
- US-A1- 2009 304 891

## Description

### BACKGROUND OF THE INVENTION

The present invention relates to improved compositions of chewing gum. More particularly, the invention relates to improving chewing gum by the use of specific bulking agents in sugar and non-sugar chewing gum products to give improved texture, moisture absorption properties, and improved shelf life properties. The improved chewing gum compositions may also be used in a variety of chewing gum products such as sugar and sugar-free gum as well as bubble gum.

In recent years, efforts have been devoted to replace sugar and sugar syrups normally found in chewing gum with other carbohydrates and non-carbohydrates. Non-sugar or sugar-free chewing gum, which is growing in popularity, uses sugar alcohols or polyols to replace sugar and sugar syrups. The most popular polyols are sorbitol, mannitol and xylitol. New polyols are being developed using new technology to replace these polyols. New polyols have various unique properties which can improve the taste, texture and shelf life properties of chewing gum for consumers.

The non- sugar polyols have the advantage of not contributing to dental caries of consumers, as well as being able to be consumed by diabetics. However, all polyols have the disadvantage of causing gastro- intestinal disturbances if consumed in too great of a quantity. Therefore it would be a great advantage to be able to use a carbohydrate or carbohydrate-like food ingredient for chewing gum that would act as a bulking agent, but not contribute to dental caries nor cause gastro-intestinal disturbances.

One such bulking agent is called allulose. This bulking agent, or bulk sweetener, is approved for use in food products and in chewing gum in the U.S., but not in all countries. Although a sugar, allulose may not contribute to dental caries, nor does it cause significant gastro- intestinal disturbances and is low in calories. Thus, this ingredient's use in chewing gum could be a definite improvement.
The use of allulose as a low- calorie carbohydrate sweetener and bulking agent is disclosed in WO 2015/075473. US2009/0304891 discloses that a low-calorie sweetener with taste comparable to that of sucrose can be provided with D-psicose; EP 2098227 provides for a non-cariogenic material prepared by blending a rare sugar in the D form selected from the group consisting of D-psicose, D-sorbose, D-tagatose as rare sugars, a rare sugar in the L form selected from the group consisting of L-fructose, L-psicose, L-tagatose or allitol as a rare sugar derivative, singly or in combination; US 2007/116800 provides for a chewing gum composition comprising a gum base, at least one high-potency sweetener, and at least one sweet taste improving composition; WO 2015/146135 relates to steviol glycosides and compositions comprising such steviol glycosides, as well as methods of preparing and purifying steviol glycosides (e.g., consumables) and methods for enhancing the flavor or sweetness or consumables using these steviol glycosides and compositions.

### SUMMARY OF THE INVENTION

The present invention provides for a chewing gum composition comprising:
a) 5% to 95% gum base;
b) 0.1% to 10% of a flavoring agent;
c) 5% to 95% bulk sweetener wherein the bulk sweetener is selected from sugar, dextrose, fructose, xylose, mannose, isomaltulose, sorbitol, maltitol, isomalt, mannitol, xylitol, erythritol, and lactitol and wherein a portion of the bulk sweetener comprises 1% to 50% allulose by weight of the chewing gum composition, and wherein the chewing gum composition contains less than 5% moisture.

The present invention is a chewing gum with a new bulk sweetener, specifically allulose. Herein is also disclosed is a method of producing a chewing gum with a new bulk sweetener, specifically allulose.. The bulk sweetener may be added to sucrose type gum formulations, replacing a small or large quantity of sucrose. The formulation may be a low- moisture formulation containing low amounts of moisture-containing syrup. The bulk sweetener, allulose, may also be used in low- or no sugar gum formulations replacing sorbitol, mannitol, other polyols, or carbohydrates. Non-sugar formulations may include low- moisture, sugar- free chewing gums.

The bulk sweetener, allulose, may be combined with other bulk sweeteners for use in chewing gum, including but not limited to sucrose, dextrose, fructose, maltose, maltodextrin, xylose, as well as sugar alcohols including but not limited to sorbitol, mannitol, xylitol, maltitol, lactitol, palatinit, and hydrogenated starch hydrolyzates such as Lycasin. The bulk sweetener, allulose, may be combined in the gum formulation or co-dried or dry blended with the other bulk sweeteners prior to use in the gum formulation. Co-drying may be done by various methods of spray drying, fluid bed coating, coacervation, and other granulating or agglomerating techniques. The bulk sweetener, allulose, may also be combined with high potency sweeteners including, but not limited to, thaumatin, aspartame, acesulfame K, sodium saccharin, glycyrrhizin, alitame, cyclamate, stevioside, dihydrochalcones, stevia, steviol glycosides, glycosylated steviolglycosides, and luo han guo.

This sweetener, allulose, when used as a bulking agent, gives chewing gum an improved texture, an improved shelf life and unique flavor/ sweetness quality. Even though Allulose is very similar to sucrose, it may not be cariogenic and is non-caloric, nor does it cause significant gastro- intestinal disturbances, giving a highly consumer-acceptable chewing gumproduct.

### DESCRIPTION OF THE INVENTION

Allulose (psicose) is a carbohydrate bulking agent that is similar to fructose. Allulose is an isomer of fructose obtained by isomerization of fructose, and its sweetness intensity is about 70% of that of sucrose.

Allulose is produced by Matsutani and is marketed under the tradename of ASTRACEA^{™}. It is also being marketed by Tate & Lyle under the tradename of DOLCIA PRIMA^{™} and by AGG under the tradename ALLSWEET^{™}. Allulose is a monosaccharide, is available as an anhydrous crystalline, an amorphous material, and as a liquid syrup. In a variety of tests, pure allulose has been found to not cause gastrointestinal disturbances and is low in calories. Allulose, like sucrose, has a high melting point of 109°C. Allulose can be obtained in water as an allulose syrup. Any of these forms of allulose may be used in chewing gum, and the terms allulose and allulose solid/syrup herein refers to all forms.

### I. Definitions

The terms used in this specification generally have their ordinary meanings in the art, within the context of this disclosed subject matter and in the specific context where each term is used. Certain terms are discussed below, or elsewhere in the specification, to provide additional guidance to the practitioner in describing the compositions and methods of the disclosed subject matter and how to make and use them.

As used herein, the use of the word "a" or "an" when used in conjunction with the term "comprising" in the claims and/or the specification may mean "one," but it is also consistent with the meaning of "one or more," "at least one," and "one or more than one." Still further, the terms "having," "including," "containing" and "comprising" are interchangeable and one of skill in the art is cognizant that these terms are open ended terms.

The term "about" or "approximately" means within an acceptable error range for the particular value as determined by one of ordinary skill in the art, which will depend in part on how the value is measured or determined, i.e., the limitations of the measurement system. For example, "about" can mean within 3 or more than 3 standard deviations, per the practice in the art. Alternatively, "about" can mean a range of up to 20%, preferably up to 10%, more preferably up to 5%, and more preferably still up to 1% of a given value.

As used herein, the term "chewing gum" refers to a flavored substance intended for chewing. The term as used herein also includes bubble gum and confectionery products containing chewing gum. In certain embodiments, chewing gum forms include, but are not limited to, tablets, sticks, solid balls, hollow balls, cut and wrap, and pellets or pillows. Unless otherwise specified, all percentages used herein are weight percents of the total composition. As used herein, chewing gum contains a water insoluble base portion and a water-soluble bulk portion.

An amorphous solid, is any noncrystalline solid. A crystal or crystalline solid is a solid material whose constituents, such as atoms, molecules or ions, are arranged in a highly ordered microscopic structure, forming a crystal lattice that extends in all directions. The allulose of the present invention may be used in its amorphous or crystalline solid forms.

Allulose may be added to chewing gum as an amorphous or crystal solid form, or in its liquid form. Its solubility in water is very high at room temperature, but increases with increased temperature. Allulose may be used in chewing gum as a texture and flavor modifier, bulking agent, and may improve texture, flavor, and shelf life properties. Allulose may replace solids like sucrose, dextrose or lactose when used in its powder form, or may replace syrups when used in its liquid or syrup form. At levels of 1% to 25%, allulose may replace part of the solids in sugar gum or, as a liquid, all or part of the syrup in sugar gum. In some examples, at higher levels of 25% to 50% of the gum formulation, allulose may replace all of the solids in a chewing gum formulation. A preferred range of allulose is 5% to 50%, and more preferably 10% to 40%, of the gum composition.

If allulose syrup (liquid) is used, the syrup solids content may vary widely. The allulose syrup may comprise a solids content of 1-95%, or from 20-75% by weight of the allulose syrup.

Unique chewing gum formulations can be obtained when all bulk sweeteners are replaced with allulose powder and syrup. The slightly lower sweetness intensity allows for use of unique flavor combinations. High intensity sweeteners may be added to increase sweetness to obtain sweetness more typical of chewing gum formulations. Chewing gum formulations with allulose may contain a very low amount of moisture in the gum formulation, i.e., below 2%, or may contain a medium amount of moisture, 2-5%.

Although allulose is similar to sucrose, its possible non-caries and its low caloric properties suggest it may be used in chewing gum formulations containing non-sugar ingredients. Non-sugar ingredients are alditols or polyols such as sorbitol, mannitol, xylitol, lactitol, palatinit (isomalt), maltitol, and hydrogenated starch hydrolyzates (HSH). These alditols are used in a variety of combinations to develop unique sugarless chewing gum formulations. Allulose may be used to replace the individual alditols or combinations of alditols. With partial replacement of one ormore alditols, allulose can be used at levels of 5-25%. If allulose replaces a large amount or most of the alditols, this level may be about 25% to 50% of the gum formulation.

Some sugar- free chewing gum formulations contain high levels of glycerin and are very low in moisture, i.e., less than about 2%. Allulose solids or syrup may replace part or all of the glycerin used in these types of formulations. At higher moisture levels (more than 2%) in sugar-free gum, a liquid sorbitol (70% sorbitol, 30% water) is used.

Allulose solids (crystalline or amorphous) or syrup may replace part or all of the sorbitol liquid. New sugar-free syrups like hydrogenated starch hydrolyzates, such as Lycasin, may also be replaced in part or totally by allulose solids or syrup. The same product advantages found with hydrogenated starch hydrolyzates syrups, such as improved product shelf life and improved texture may also be found with the use of allulose solids or syrup. Use of Allulose in gum and confections can reduce crystallization especially when used in combination with sucrose, xylitol, and erythritol, and other readily crystallizable sugars and alditols.

Recent advances use hydrogenated starch hydrolyzates (HSH) and glycerin preblended and co- evaporated to reduce moisture in some sugar- free gum formulations. Allulose solids and/or syrup may be used to replace part or all of the HSH/glycerin blends in chewing gum formulations. Aqueous dlulose solids and/or syrup may also replace HSH in the preblend with glycerin and be co-evaporated with glycerin to obtain a low moisture, non- crystallizable blend. Combinations of allulose solids/syrup with alditols like sorbitol, maltitol, xylitol, lactitol and mannitol in aqueous form may also be blended with glycerin and co-evaporated for use in low-moisture, sugar-free gum.

In a similar manner, allulose solids/syrup preblended in glycerin and co-evaporated may be used in conventional sugar chewing gum formulations. Allulose may be combined with other sugars like dextrose, sucrose, lactose, maltose, invert sugar, fructose and corn syrup solids to form a liquid mix to be blended with glycerin and co- evaporated. Allulose may also be combined with other sugars like tagatose, trehalose, isomaltulose or other carbohydrates such as inulin, bio-agave, isomaltooligosacharides, maltodextrins and other types of carbohydrates to form a liquid mix to be blended with glycerin and co- evaporated. Other types of carbohydrates include Nutriose, ingestible dextrin, fructooligosaccarides (FOS) and polydextrose. Allulose solids/syrup may also be mixed with syrup and blended with glycerin and co-evaporated for use in a sugar chewing gum formulation. Because of allulose's natural humectancy and its low molecular weight, syrup blends with allulose may not need to be co-evaporated with glycerin. Coevaporated syrups blends of allulose with sugars like dextrose, sucrose, maltose, invert sugar, fructose, tagatose, trehalose, isomaltulose, and other types of carbohydrates as well as combinations of these sugars may be made at high solids and low moisture for chewing gum. In addition, coevaporated syrups may be made with blends of sorbitol, xylitol, erythritol, maltitol, lactitol, isomalt, mannitol, hydrogenated starch hydrolyzates and combinations without glycerin to obtain high solids syrup with low moisture. Other types of low calorie carbohydrates such as inulin indigestible dextrin, Nutriose, and Polydextrose may also be used to make co-evaporated syrups.

Allulose may also be dry blended with the various sugars and alditols mentioned above and in various ratios in order to obtain the properties of sugar or sugarless chewing gum desired. Also, the allulose blended syrups and the blended powders may be used at various ratios to produce the chewing gum having the texture and shelf life properties

Allulose bulk sweetener may also be co-dried or dry blended with a variety of sugars such as sucrose, dextrose, lactose, fructose, corn syrup solids and other carbohydrates mentioned above and used in a sugar-containing gum formulation. Allulose may be co-dried with a variety of alditols such as sorbitol, mannitol, erythritol, xylitol, maltitol, palatinit and hydrogenated starch hydrolyzates and used in a sugar-free gum formulation. Co-drying refers to methods of co-crystallization and co-precipitation of allulose with other sugars and alditols, as well as co- drying by encapsulation, agglomeration and absorption with other sugars and alditols. Spray drying and fluid bed drying are also methods or co-drying.

Co-drying by encapsulation, agglomeration and absorption can also include the use of encapsulating and agglomerating agents. Allulose may be mixed with other sugars or alditols prior to being co-dried by encapsulation or agglomeration, or may be used alone with the encapsulating and agglomerating agents. These agents modify the physical properties of the bulk sweetener and control its release from chewing gum. Since allulose is highly soluble in water as noted earlier, controlling the release of allulose modifies the texture and flavor of the chewing gum.

Physical modifications of the sweetener by encapsulation with another substrate will slow its release in chewing gum by reducing the solubility or dissolution rate. Any standard technique which gives partial or full encapsulation of the bulk sweetener can be used. These techniques include, but are not limited to, spray drying, spray chilling, fluid-bed coating and coacervation. These encapsulation techniques that give partial encapsulation or full encapsulation can be used individually or in any combination in a single step process or multiple step process. Generally, delayed release of bulk sweetener is obtained in multistep processes like spray drying the bulk sweetener and then fluid-bed coating the resultant powder.

The encapsulation techniques here described are standard coating techniques and generally give varying degrees of coating from partial to full coating, depending on the coating composition used in the process. Also, the coating compositions may be susceptible to water permeation to various degrees. Generally, compositions that have high organic solubility, good film-forming properties and low water solubility give better delayed release of the bulk sweetener. Such compositions include acrylic polymers and copolymers, carboxyvinyl polymer, polyamides, polystyrene, polyvinyl acetate, polyvinyl acetate phthalate, polyvinyl-pyrrolidone, and waxes. Although all of these materials are possible for encapsulation of the bulk sweetener, only food-grade material should be considered. Two standard food-grade coating materials that are good film formers but not water soluble are shellac and zein. Others which are more water soluble, but good film formers, are materials like agar, alginates, a wide range of cellulose derivatives like ethyl cellulose, methyl cellulose, sodium hydroxymethylcellulose, and hydroxypropylmethyl cellulose, dextrin, gelatin, and modified starches. These ingredients, which are generally approved for food use, also give a delayed release when used as an encapsulant. Other encapsulants like acacia or maltodextrin can also encapsulate allulose but may increase the release rate of the bulk sweetener. The amount of coating or encapsulating material on the bulk sweetener also controls the length of time for its release from chewing gum. Generally, the higher the level of coating the slower the release of the bulk sweetener during mastication. The release rate is generally not instantaneous, but gradual over an extended period of time.

Another method of giving a delayed release of the bulk sweetener is agglomeration of the bulk sweetener with an agglomerating agent which partially coats the bulk sweetener. This method includes the step of mixing the bulk sweetener and agglomerating agent with a small amount of water or solvent. The mixture is prepared in such a way as to have individual wet particles in contact with each other so that a partial coating can be applied. After the water or solvent is removed, the mixture is ground and used as a powdered, coated bulk sweetener.

Materials that can be used as the agglomerating agent are the same as those used in encapsulation mentioned previously. However, since the coating is only a partial encapsulation and the bulk sweetener is very water soluble, some agglomerating agents are more effective in delaying the sweetener release than others.

Some of the better agglomerating agents are the organic polymers like acrylic polymers and co- polymers, polyvinyl acetate, polyvinylpyrrolidone, waxes, shellac, and zein. Other agglomerating agents are not as effective in giving the bulk sweetener a delayed release as are the polymers, waxes, shellac and zein, but can be used to give some delayed release. These other agglomerating agents include, but are not limited to, agar, alginates, a wide range of cellulose derivatives like ethyl cellulose, methyl cellulose, sodium hydroxymethyl cellulose, hydroxypropylmethyl cellulose, dextrin, gelatin, modified starches, vegetable gums like guar gum, locust bean gum, and carrageenan. Even though the agglomerated bulk sweetener is only partially coated, when the quantity of coating is increased compared to the quantity of the bulk sweetener, the release of the bulk sweetener can be delayed for a longer time during mastication.

The bulk sweetener may be coated in a two- step process or multiple step process. The bulk sweetener may be encapsulated with any of the materials as described previously and then the encapsulated sweetener can be agglomerated as described previously to obtain an encapsulated/agglomerate d/bulk sweetener product that could be used in chewing gum to give a delayed release of bulk sweetener.

In another embodiment of this invention, allulose sweetener may be absorbed onto another component which is porous and become entrapped in the matrix of the porous component. Common materials used for absorbing the bulk sweetener include, but are not limited to, silicas, silicates, pharmasorb clay, spongelike beads or microbeads, amorphous sugars like spray-dried dextrose, sucrose, alditols, amorphous carbonates and hydroxides, including aluminum and calcium lakes, vegetable gums and other spray dried materials.

Depending on the type of absorbent material and how it is prepared, the amount of bulk sweetener that can be loaded onto the absorbent will vary. Generally materials like polymers, spongelike beads or microbeads, amorphous sugars and alditols and amorphous carbonates and hydroxides absorb about 10% to about 40% of the weight of the absorbent. Other materials like silica and pharmasorb clays may be able to absorb about 20% to about 80% of the weight of the absorbent.

The general procedure for absorbing the bulk sweetener onto the absorbent is as follows:

An absorbent like fumed silica powder can be mixed in a powder blender and an aqueous solution of the bulk sweetener can be sprayed onto the powder as mixing continues. The aqueous solution can be about 5% to 30% solids, and higher solid levels may be used if temperatures up to 90°C are used. Generally water is the solvent, but other solvents like alcohol could also be used if approved for use in food. As the powdermixes, the liquid is sprayed onto the powder. Spraying is stopped before the mix becomes damp. The still free-flowing powder is removed from the mixer and dried to remove the water or other solvent, and ground to a specific particle size.

After the bulk sweetener is absorbed onto an absorbent or fixed onto an absorbent, the fixative/ sweetener can be coated by encapsulation. Either full or partial encapsulation may be used, depending on the coating composition used in the process. Full encapsulation may be obtained by coating with a polymer as in spray drying, spray chilling, fluid-bed coating, coacervation, or any other standard technique. A partial encapsulation or coating can be obtained by agglomeration of the fixative/sweetener mixture using any of the materials discussed above.

The three methods of use to obtain a delayed release of bulk sweetener are: (1)encapsulation by spray drying, fluid-bed coating, spray chilling and coacervation to give full or partial encapsulation, (2) agglomeration to give partial encapsulation and (3)fixation or entrapment/absorption which also gives partial encapsulation. These three methods, combined in any usable manner which physically isolates the bulk sweetener, reduces its dissolvability or slows down the release of bulk sweetener, are included in this invention.

Other methods of treating the allulose bulk sweetener to physically isolate the sweetener from other chewing gum ingredients may also have some effect on its release rate and its effect on chewing gum flavor and texture. The bulk sweetener may be added to the liquid inside a liquid center gum product. The center fill of a gum product may comprise one or more carbohydrate syrups, glycerin, thickeners, flavors, acidulants, colors, sugars and sugar alcohols in conventional amounts. The ingredients are combined in a conventional manner. The bulk sweetener is dissolved in the center-fill liquid and the amount of bulk sweetener added to the center-fill liquid may be about 0.1% to about 20% by weight of the entire chewing gum formula. This method of using the bulk sweetener in chewing gum can allow for a lower usage level of the bulk sweetener, can give the bulk sweetener a smooth release rate, and can reduce or eliminate any possible reaction of the bulk sweetener with gum base, flavor components or other components, yielding improved shelf stability.

Another method of isolating the allulose bulk sweetener from other chewing gum ingredients is to add allulose to the dusting compound of a chewing gum. A rolling or dusting compound is applied to the surface of chewing gum as it is formed. This rolling or dusting compound serves to reduce sticking to machinery as it is formed, reduces sticking of the product to machinery as it is wrapped, and sticking to its wrapper after it is wrapped and being stored. The rolling compound comprises allulose bulk sweetener alone or in combination with mannitol, sorbitol, sucrose, starch, calcium carbonate, talc, other orally acceptable substances or a combination thereof. Because of its hygroscopic nature, allulose should preferably be use with other non-hygroscopic ingredients such as sucrose, talc, and calcium carbonate and anti-tack agents. The rolling compound constitutes from about 0.25% to about 10.0%, but preferably about 1% to about 3% of weight of the chewing gum composition. The amount of allulose sweetener added to the rolling compound is about 0.5% to 100% of the rolling compound or about 0.005% to about 5% of the chewing gum composition. This method of using allulose bulk sweetener in the chewing gum can allow a lower usage level of the bulk sweetener, can give the bulk sweetener a more controlled release rate, and can reduce or eliminate any possible reaction of the bulk sweetener with gum base, flavor components, or other components, yielding improved shelf stability.

The previously described encapsulated, agglomerated, or absorbed Allulose bulk sweetener may readily be incorporated into a chewing gum composition. The remainder of the chewing gum ingredients are non- critical to the present invention. That is, the coated particles of bulk sweetener can be incorporated into conventional chewing gum formulations in a conventional manner. The allulose bulk sweeteners may be used in a sugar-free or sugar chewing gum to modify the sweetness thereof. The coated bulk sweetener may be used in regular chewing gum, sugar free chewing gum, or bubble gum.

In general, a chewing gum composition typically comprises a water-soluble bulk portion, a water-insoluble chewable gum base portion and typically water-insoluble flavoring agents. The water- soluble portion dissipates with a portion of the flavoring agent over a period of time during chewing. The gum base portion is retained in the mouth throughout the chew.

The insoluble gum base generally comprises elastomers, resins, fats and oils, waxes, softeners and inorganic fillers. Elastomers may include polyisobutylene, isobutylene-isoprene copolymer and styrene butadiene rubber, as well as natural latexes such as chicle. Resins include polyvinylacetate and terpene resins. Fats and oils may also be included in the gum base, including tallow, hydrogenated and partially hydrogenated vegetable oils, and cocoa butter. Commonly employed waxes include paraffin, microcrystalline and natural waxes such as beeswax and carnauba. In the present invention, the insoluble gum base constitutes between about 5 to about 95% by weight of the gum. More preferably the insoluble gum base comprises between 10 and 50% by weight of the gum and most preferably about 20 to about 35% by weight of the gum.

The gum base typically also includes a filler component. The filler component may be calcium carbonate, magnesium carbonate, talc, dicalcium phosphate or the like. The filler may constitute between about 5 and about 60% by weight of the gum base. Preferably, the filler comprises about 5 to about 50% by weight of the gum base.

Gum bases typically also contain softeners, including glycerol monostearate and glycerol triacetate. Further, gum bases may also contain optional ingredients such as antioxidants, colors and emulsifiers. The present invention contemplates employing any commercially acceptable gum base.

The water-soluble portion of the chewing gum may further comprise softeners, sweeteners, flavoring agents and combinations thereof. As used herein, the term "bulking and sweetening agents" generically includes sugars, sugar alcohols and syrups thereof. Softeners are added to the chewing gum in order to optimize the chewability andmouth feel of the gum. Softeners, also known in the art as plasticizers or plasticizing agents, generally constitute between about 0.5 to about 15.0% by weight of the chewing gum. Softeners contemplated by the present invention include glycerin, lecithin and combinations thereof. Further, aqueous sweetener solutions such as those containing sorbitol, hydrogenated starch hydrolysates, corn syrup and combinations thereof may be used as softeners and binding agents in gum.

As mentioned above, the allulose solids/syrup bulk sweetener of the present invention will most likely be used in sugar gum formulations. However, sugar-free formulations are also within the scope of theinvention. Sugar sweeteners generally include saccharide- containing components commonly known in the chewing gum art which comprise, but are not limited to, sucrose, dextrose, maltose, dextrin, dried invert, sugar, fructose, levulose, galactose, corn syrup solids, tagatose, trehalose, isomaltulose, and the like, alone or in any combination.

The allulose solids/syrup bulk sweetener of the present invention can also be used in combination with other sugarless sweeteners. Generally sugarless sweeteners include components with sweetening characteristics but which are devoid of the commonly known sugars and comprise, but are not limited to, sugar alcohols such as sorbitol, mannitol, xylitol, hydrogenated starch hydrolysates, maltitol and the like, alone or in any combination.

Depending on the particular sweetness release profile and shelf - stability needed, the allulose solid/syrup bulk sweeteners of the present invention can also be used in combination with coated or uncoated high-potency sweeteners or with high-potency sweeteners coated with othermaterials andby other techniques.

A flavoring agent is present in the chewing gum in an amount within the range of from about 0.1 to about 10.0 weight percent and preferably from about 0.5 to about 3.0 weight percent of the gum. The flavoring agents may comprise essential oils, synthetic flavors, or mixture thereof including, but not limited to, oils derived from plants and fruits such as citrus oils, fruit essences, peppermint oil, spearmint oil, clove oil, oil of wintergreen, anise, and the like. Artificial flavoring components are also contemplated for use in gums of the present invention. Those skilled in the art will recognize that natural and artificial flavoring agents may be combined in any sensorally acceptable blend. All such flavors and flavor blends are contemplated by the present invention.

Optional ingredients such as colors, emulsifiers and pharmaceutical agents may be added to the chewing gum.

In general, chewing gum is manufactured by sequentially adding the various chewing gum ingredients to a commercially available mixer known in the art. After the ingredients have been thoroughly mixed, the gum mass is discharged from the mixer and shaped into the desired form such as by rolling into sheets and cutting into sticks, extruding into chunks or casting intopellets.

Generally, the ingredients are mixed by first melting the gum base and adding it to the running mixer. The base may also be melted in the mixer itself. Color or emulsifiers may also be added at this time. A softener such as glycerin may also be added at this time, along with syrup and a portion of thebulking agent/sweetener. Further portions of the bulking agent/sweetener may then be added to the mixer. A flavoring agent is typically added with the final portion of the bulking agent. A high-intensity sweetener is preferably added after the final portion of bulking agent and flavors have been added. The entire mixing procedure typically takes fram five to fifteen minutes, but longer mixing times may sometimes be required. Those skilled in the art will recognize that many variations of the above described procedure may be followed.

### II. EXAMPLES

The following examples of the invention and comparative examples are provided by way of explanation and illustration.

The formulas listed in Table 1 comprise various sugar-type formulas in which allulose can be added to chewing gum after it is dissolved in water and mixed with various aqueous solvents. Also, allulose syrups having varying ranges of solids can be obtained from suppliers. Adjusting the solids content can alter the physical properties of the allulose syrup (i.e., viscosity) to achieve desired attributes for processing or product performance.

**Table 1**

| **Weight Percent** | | | | | | | | |
|---|---|---|---|---|---|---|---|---|
| Ingredient | Ex. 1 | Ex. 2 | Ex. 3 | Ex. 4 | Ex. 5 | Ex. 6 | Ex. 7 | Ex. 8 |
| Sugar | 55.6 | 55.6 | 55.6 | 47.0 | 53.0 | 53.0 | 55.6 | 47.0 |
| Gum base | 19.2 | 19.2 | 19.2 | 19.2 | 19.2 | 19.2 | 19.2 | 19.2 |
| Corn syrup | 12.9 | 2.9 | 8.9 | 2.9 | 6.9 | 6.9 | 0.0 | 2.9 |
| Flavor | 0.9 | 0.9 | 0.9 | 0.9 | 0.9 | 0.9 | 0.9 | 0.9 |
| Glycerin | 1.4 | 1.4 | 1.4 | 0.0 | 0.0 | 0.0 | 1.4 | 0.0 |
| Allulose: Solid/Liquid/ Blend | 10.0 | 20.0 | 14.0 | 30.0 | 20.0 | 20.0 | 22.9 | 30.0 |
| TOTAL | 100 | 100 | 100 | 100 | 100 | 100 | 100 | 100 |

### EXAMPLE 1

Allulose powder can be added directly to the gum.

### EXAMPLE 2

A 160 gram portion of allulose can be dissolved in 40 grams of water at 40°C making an 80% solution and added to gum.

### EXAMPLE 3

Allulose syrup at 70% solids can be added directly to the gum.

### EXAMPLE 4

A blend of 160 grams of allulose and 40 grams of water is mixed at 40°C. To this is added 20 grams of glycerin to give a mixture of 73% allulose, 18% water and 9% glycerin, and added to gum

### EXAMPLE 5

To 160 grams of allulose syrup at 70% solids is added 40 grams glycerin to give an 80% allulose syrup with 20% glycerin, and added to gum.

### EXAMPLE 6

To 160 grams of allulose syrup of 70% solids is added 40 grams of propylene glycol giving an 80% allulose syrup with 20% propylene glycol added to gum.

### EXAMPLE 7

To 140 grams of allulose syrup at 70% solids is added to 89 grams of corn syrup and blended giving a mixture of 61% allulose syrup and 39% corn syrup.

### EXAMPLE 8

To a 200 gram quantity of corn syrup is added 100 grams of glycerin. To this mixture is added 75 grams of allulose and blended at 50°C. This mixture is added to gum.

In the next examples of sugar gum formulations, allulose can be dissolved in water and emulsifiers can be added to the aqueous solution. Example solutions can be prepared by dissolving 15 grams of allulose in 70 grams water and in examples 10-14, adding 15 grams of emulsifiers of various hydrophilic-lipophilic balance (HLB) values to the solution. The mixtures can then be used in the following formulas.

**Table 2**

| **Weight Percent** | | | | | | |
|---|---|---|---|---|---|---|
| Ingredient | Ex. 9 | Ex. 10 | Ex. 11 | Ex. 12 | Ex. 13 | Ex. 14 |
| Sugar | 50.7 | 50.7 | 50.7 | 50.7 | 50.7 | 50.7 |
| Gum base | 19.2 | 19.2 | 19.2 | 19.2 | 19.2 | 19.2 |
| Corn syrup | 12.9 | 12.9 | 12.9 | 12.9 | 12.9 | 12.9 |
| Glycerin | 1.4 | 1.4 | 1.4 | 1.4 | 1.4 | 1.4 |
| Dextrose | 9.9 | 9.9 | 9.9 | 9.9 | 9.9 | 9.9 |
| Flavor | 0.9 | 0.9 | 0.9 | 0.9 | 0.9 | 0.9 |
| Bulk sweetener/Emulsifier/Water mixture | 5.0 | 5.0 | 5.0 | 5.0 | 5.0 | 5.0 |
| TOTAL | 100.0% | 100.0% | 100.0% | 100.0% | 100.0% | 100.0% |
| HLB | NONE | HLB=2 | HLB=4 | HLB=6 | HLB=9 | HLB=12 |

### EXAMPLES 15-20

The same as the formulations made in Examples 9-14, respectively, except that the flavor can be mixed together with the aqueous bulk sweetener solution and emulsified before adding the mixture to the gum batch.

Allulose bulk sweetener can also be blended into various base ingredients. A typical base formula is as follows:

| | Weight Percent | |
|---|---|---|
| Polyvinyl acetate | | 27 |
| Natural or synthetic rubber | | 13 |
| Wax | | 13 |
| Fat | | 3 |
| Glycerol monostearate | | 5 |
| Terpene resin | | 27 |
| Calcium carbonate filler | | 12 |
| | | 100% |

The individual base components can be softened prior to their addition in the base manufacturing process. To the presoftened base component, allulose can be added and mixed and then the pre-softened base/bulk sweetener blend can be added to make the finished base. In the following examples, allulose can be mixed first with one of the base ingredients, and the mixed ingredient can then be used in making a gum base. The ingredients blended with allulose can then be used at the levels indicated in the typical base formula above.

### EXAMPLE 21

The terpene resin used to make the base is 80% polyterpene resin and 20% allulose.

### EXAMPLE 22

The polyvinylacetate used to make the base is 80% low molecular weight polyvinylacetate and 20% allulose.

### EXAMPLE 23

5% allulose can be mixed with 95% of a gum base having the above listed typical formula. The allulose can be added near the end of the process, after all the other ingredients are added.

The samples of the finished base made with allulose added to different base components cant then be evaluated in a sugar type chewing gum formulated as follows:

**Table 3**

| | **Weight Percent** | |
|---|---|---|
| (For Examples 21, 22, 23): | | |
| Sugar | | 55.2 |
| Base | | 19.2 |
| Corn syrup | | 13.4 |
| Glycerin | | 1.4 |
| Dextrose monohydrate | | 9.9 |
| Flavor | | 0.9 |
| | | 100% |

The theoretical level of allulose bulk sweetener is 1% in the finished gum.

The following Tables 4 through 11 are examples of gum formulations that demonstrate formula variations in which allulose or allulose syrup may be used.

Examples 24-28 in Table 4 demonstrates the use of allulose in low moisture sugar formulations less than 2% theoretical moisture:

**Table 4**

| **Weight Percent** | | | | | |
|---|---|---|---|---|---|
| Ingredient | Ex. 24 | Ex. 25 | Ex. 26 | Ex. 27 | Ex. 28 |
| Sugar | 57.9 | 53.9 | 48.9 | 25.0 | 0.0 |
| Gum base | 19.2 | 19.2 | 19.2 | 19.2 | 19.2 |
| Corn syrup^{a} | 6.0 | 6.0 | 6.0 | 6.0 | 6.0 |
| Dextrose monohydrate | 10.0 | 10.0 | 10.0 | 10.0 | 10.0 |
| Lactose | 0.0 | 0.0 | 0.0 | 5.0 | 5.0 |
| Glycerin^{b} | 5.0 | 5.0 | 5.0 | 8.9 | 8.9 |
| Flavor | 0.9 | 0.9 | 0.9 | 0.9 | 0.9 |
| Allulose | 1.0 | 5.0 | 10.0 | 25.0 | 50.0 |
| TOTAL | 100.0% | 100.0% | 100.0% | 100.0% | 100.0% |

| | | | | | |
|---|---|---|---|---|---|
| ^{a}Corn syrup is evaporated to 85% solids, 15% moisture ^{b}Glycerin and syrup may be blended and co-evaporated | | | | | |

Examples 29-33 in Table 5 demonstrate the used of allulose in a medium moisture sugar formulations having about 2% to about 5% moisture.

Comparative Examples 34-38 in Table 6 demonstrate the used of allulose in high moisture sugar formulations having more than about 5% moisture.

**Table 5**

| **Weight Percent** | | | | | |
|---|---|---|---|---|---|
| Ingredient | Ex. 29 | Ex. 30 | Ex. 31 | Ex. 32 | Ex. 33 |
| Sugar | 52.5 | 48.5 | 43.5 | 25.0 | 0.0 |
| Gum base | 19.2 | 19.2 | 19.2 | 19.2 | 19.2 |
| Corn syrup^{a} | 15.0 | 15.0 | 15.0 | 19.9 | 19.9 |
| Dextrose monohydrate | 10.0 | 10.0 | 10.0 | 10.0 | 10.0 |
| Glycerin^{b} | 1.4 | 1.4 | 1.4 | 0.0 | 0.0 |
| Flavor | 0.9 | 0.9 | 0.9 | 0.9 | 0.9 |
| Allulose | 1.0 | 5.0 | 10.0 | 25.0 | 50.0 |
| TOTAL | 100.0% | 100.0% | 100.0% | 100.0% | 100.0% |

| | | | | | |
|---|---|---|---|---|---|
| ^{a}Corn syrup is evaporated to 85% solids, 15% moisture ^{b}Glycerin and syrup may be blended and co-evaporated | | | | | |

**Table 6**

| **Weight Percent** | | | | | |
|---|---|---|---|---|---|
| Ingredient | Ex*. 34 | Ex*. 35 | Ex*. 36 | Ex*. 37 | Ex*. 38 |
| Sugar | 50.0 | 46.0 | 41.0 | 25.0 | 0.0 |
| Gum base | 24.0 | 24.0 | 24.0 | 24.0 | 24.0 |
| Corn syrup | 24.0 | 24.0 | 24.0 | 24.6 | 24.6 |
| Glycerin | 0.0 | 0.0 | 0.0 | 0.4 | 0.4 |
| Flavor | 1.0 | 1.0 | 1.0 | 1.0 | 1.0 |
| Allulose | 1.0 | 5.0 | 10.0 | 25.0 | 50.0 |
| TOTAL | 100.0% | 100.0% | 100.0% | 100.0% | 100.0% |

| | | | | | |
|---|---|---|---|---|---|
| *-denotes a Comparative Example | | | | | |

Examples 39-43 in Table 7 and examples 44-53 in Tables 8 and 9 demonstrate the use of allulose in low and high moisture gums that are sugar free. Low moisture gums have less than about 2% moisture and high moisture gums have greater than 2% moisture.

**Table 7**

| **Weight Percent** | | | | | |
|---|---|---|---|---|---|
| Ingredient | Ex. 39 | Ex. 40 | Ex. 41 | Ex. 42 | Ex. 43 |
| Gum base | 25.5 | 25.5 | 25.5 | 25.5 | 25.5 |
| Sorbitol | 50.0 | 46.0 | 41.0 | 0.0 | 0.0 |
| Mannitol | 12.0 | 12.0 | 12.0 | 38.0 | 13.0 |
| Glycerin | 10.0 | 10.0 | 10.0 | 10.0 | 10.0 |
| Flavor | 1.5 | 1.5 | 1.5 | 1.5 | 1.5 |
| Allulose | 1.0 | 5.0 | 10.0 | 25.0 | 50.0 |
| TOTAL | 100.0% | 100.0% | 100.0% | 100.0% | 100.0% |

**Table 8**

| **Weight Percent** | | | | | |
|---|---|---|---|---|---|
| Ingredient | Ex. 44 | Ex. 45 | Ex. 46 | Ex. 47 | Ex. 48 |
| Gum base | 25.5 | 25.5 | 25.5 | 25.5 | 25.5 |
| Sorbitol | 50.0 | 46.0 | 41.0 | 26.0 | 0.0 |
| Liquid sorbitol* | 10.0 | 10.0 | 10.0 | 10.0 | 10.0 |
| Mannitol | 10.0 | 10.0 | 10.0 | 10.0 | 11.0 |
| Glycerin | 2.0 | 2.0 | 2.0 | 2.0 | 2.0 |
| Flavor | 1.5 | 1.5 | 1.5 | 1.5 | 1.5 |
| Allulose | 1.0 | 5.0 | 10.0 | 25.0 | 50.0 |
| TOTAL | 100.0% | 100.0% | 100.0% | 100.0% | 100.0% |

| | | | | | |
|---|---|---|---|---|---|
| *Sorbitol liquid contains 70% sorbitol, 30% water. | | | | | |

**Table 9**

| **Weight Percent** | | | | | |
|---|---|---|---|---|---|
| Ingredient | Ex. 49 | Ex. 50 | Ex. 51 | Ex. 52 | Ex. 53 |
| Gum base | 25.5 | 25.5 | 25.5 | 25.5 | 25.5 |
| Sorbitol | 50.0 | 46.0 | 41.0 | 26.0 | 0.0 |
| Hydrogenated starch hydrolysate (HSH) syrup | 10.0 | 10.0 | 10.0 | 10.0 | 10.0 |
| Mannitol | 8.0 | 8.0 | 8.0 | 8.0 | 9.0 |
| Glycerin | 4.0 | 4.0 | 4.0 | 4.0 | 4.0 |
| Flavor | 1.5 | 1.5 | 1.5 | 1.5 | 1.5 |
| Allulose | 1.0 | 5.0 | 10.0 | 25.0 | 50.0 |
| TOTAL | 100.0% | 100.0% | 100.0% | 100.0% | 100.0% |

| | | | | | |
|---|---|---|---|---|---|
| *HSH and glycerin may be blended or co-evaporated | | | | | |

**Table 10**

| **Weight Percent** | | | | | | |
|---|---|---|---|---|---|---|
| Ingredient | Ex. 54 | Ex. 55 | Ex. 56 | Ex. 57 | Ex. 58 | Ex. 59 |
| Gum base | 19.2 | 19.2 | 19.2 | 19.2 | 19.2 | 19.2 |
| Sucrose | 44.5 | 24.5 | 39.5 | 14.0 | 29.5 | 19.5 |
| Glycerin | 1.4 | 1.4 | 1.4 | 1.4 | 1.4 | 1.4 |
| Corn Syrup | 14.0 | 14.0 | 14.0 | 0.0 | 14.0 | 14.0 |
| Dextrose | 5.0 | 5.0 | 0.0 | 0.0 | 10.0 | 5.0 |
| Lactose | 5.0 | 5.0 | 10.0 | 0.0 | 0.0 | 0.0 |
| Palatinose | 5.0 | 5.0 | 10.0 | 32.5 | 10.0 | 5.0 |
| Invert sugar | 0.0 | 0.0 | 0.0 | 0.0 | 10.0 | 10.0 |
| Maltose | 0.0 | 0.0 | 0.0 | 0.0 | 0.0 | 0.0 |
| Corn syrup solids | 0.0 | 0.0 | 0.0 | 0.0 | 0.0 | 0.0 |
| Flavor | 0.9 | 0.9 | 0.9 | 0.9 | 0.9 | 0.9 |
| Allulose | 5.0 | 25.0 | 5.0 | 32.0 | 5.0 | 25.0 |
| TOTAL | 100.0% | 100.0% | 100.0% | 100.0% | 100.0% | 100.0% |

| Ingredient | Ex. 60 | Ex. 61 | Ex. 62 | Ex. 63 | Ex. 64 | Ex. 65 |
|---|---|---|---|---|---|---|
| Gum base | 19.2 | 19.2 | 19.2 | 19.2 | 19.2 | 19.2 |
| Sucrose | 29.5 | 19.5 | 29.5 | 19.5 | 37.5 | 22.5 |
| Glycerin | 1.4 | 1.4 | 1.4 | 1.4 | 1.4 | 1.4 |
| Corn Syrup | 14.0 | 14.0 | 14.0 | 14.0 | 11.0 | 11.0 |
| Dextrose | 10.0 | 5.0 | 10.0 | 5.0 | 10.0 | 5.0 |
| Lactose | 0.0 | 0.0 | 0.0 | 0.0 | 0.0 | 0.0 |
| Palatinose | 10.0 | 5.0 | 10.0 | 5.0 | 5.0 | 5.0 |
| Invert sugar | 10.0 | 10.0 | 0.0 | 0.0 | 5.0 | 5.0 |
| Maltose | 0.0 | 0.0 | 10.0 | 10.0 | 0.0 | 0.0 |
| Corn syrup solids | 0.0 | 0.0 | 0.0 | 0.0 | 5.0 | 5.0 |
| Flavor | 0.9 | 0.9 | 0.9 | 0.9 | 0.9 | 0.9 |
| Allulose | 5.0 | 25.0 | 5.0 | 25.0 | 5.0 | 25.0 |
| TOTAL | 100.0% | 100.0% | 100.0% | 100.0% | 100.0% | 100.0% |

Any of the sugars may be combined with allulose and co-dried to form unique combinations such as:

### EXAMPLE 66

Dextrose and allulose can be dissolved in water in a 2:1 ratio and co-dried or co-precipitated and used in the formulas in Table 10.

### EXAMPLE 67

Allulose and sucrose can be dissolved in water in a 1:1 ratio and co-dried or co-precipitated and used in the formulas of Table 10.

### EXAMPLE 68

Allulose and sucrose can be dissolved in water in a 1:1:1 ratio and co-dried or co-precipitated and used in the formulas in Table 10.

### EXAMPLE 69

Allulose, sucrose, palatinose and lactose can be dissolved in water at 25% of each ingredient and co-dried and used in the formulas in Table 10.

### EXAMPLE 70

Allulose dextrose, palatinose and lactose can be dissolved in water at 25% of each ingredient and co-dried and used in the formulas in Table 10.

### EXAMPLE 71

Allulose, dextrose, maltose and corn syrup solids can be dissolved in water at 25% of each ingredient and co-dried and used in the formulas in Table 10.

### EXAMPLE 72

Allulose, sucrose, dextrose maltose and palatinose can be dissolved in water at 20% of each ingredient and co-dried and used in the formulas of Table 10.

Other carbohydrates such as tagatose, trehalose, inulin, Nutriose indigestible dextrin, fructooligosaccharides (FOS), polydextrin, isomaltooligosaccharides, and maltodextrins may be substituted for any of the sugars in the above Examples.

### EXAMPLE 73

Allulose, corn syrup, and glycerin can be dissolved in water at a ratio of 1:1:1, evaporated to a thick syrup and used in the formulas in Table 10.

### EXAMPLE 74

Allulose, dextrose, fructose and invert syrup may be dissolved in water at 25% of each ingredient and evaporated to a thick syrup and used in the formulas in Table 10.

### EXAMPLE 75

Allulose, dextrose, maltose, and corn syrup solids may be dissolved in water at 25% of each ingredient and evaporated to a thick syrup and used in the formulas in Table 10.

### EXAMPLE 76

Glycerin is added to example 74 at a ratio of 4:1 syrup to glycerin and evaporated to a thick syrup and used in the formulas in Table 10.

### EXAMPLE 77

Glycerin is added to example 75 at a ratio of 2:1 syrup to glycerin and evaporated to a thick syrup and used in the formulas in Table 10.

Other carbohydrates such as tagatose, trehalose, inulin, bio-agave, Nutriose, indigestible dextrins, FOS, polydextrose, maltodextrin, and isomaltooligosaccharides may be substituted for any of the sugars in the above examples.

Multiple combinations and combination of two or three sugars can also be made by melting the sugars together at about 130°C, cooling, and grinding to form powder blends such as:

### EXAMPLE 78

Allulose and dextrose are blended at a ratio of 1:1 and melted at 130°C. The blend is cooled, ground, and used in formulas in Table 10

### EXAMPLE 79

Allulose, dextrose, and isomaltulose (palatinose) at a ratio of 1:1:1 are blended and melted at 130°C. The melted blend is cooled, ground, and used in formulas in Table 10.

Table 11 shows chewing gum formulas that are free of sugar. These formulas can use a wide variety of other non-sugar alditols.

**Table 11**

| **Weight Percent** | | | | | | |
|---|---|---|---|---|---|---|
| Ingredient | Ex. 80 | Ex. 81 | Ex. 82 | Ex. 83 | Ex. 84 | Ex. 85 |
| Gum base | 25.5 | 25.5 | 25.5 | 25.5 | 25.5 | 25.5 |
| Glycerin | 2.0 | 2.0 | 2.0 | 2.0 | 2.0 | 2.0 |
| Sorbitol | 44.0 | 34.0 | 34.0 | 29.0 | 28.0 | 0.0 |
| Mannitol | 0.0 | 10.0 | 10.0 | 10.0 | 10.0 | 6.0 |
| Sorbitol liquid | 17.0 | 17.0 | 0.0 | 0.0 | 0.0 | 0.0 |
| Lycasin | 0.0 | 0.0 | 17.0 | 12.0 | 8.0 | 10.0 |
| Maltitol | 0.0 | 0.0 | 0.0 | 10.0 | 0.0 | 0.0 |
| Xylitol | 0.0 | 0.0 | 0.0 | 0.0 | 15.0 | 15.0 |
| Lactitol | 0.0 | 0.0 | 0.0 | 0.0 | 0.0 | 0.0 |
| Palatinit | 0.0 | 0.0 | 0.0 | 0.0 | 0.0 | 0.0 |
| Flavor | 1.5 | 1.5 | 1.5 | 1.5 | 1.5 | 1.5 |
| Allulose | 10.0 | 10.0 | 10.0 | 10.0 | 10.0 | 40.0 |
| TOTAL | 100.0% | 100.0% | 100.0% | 100.0% | 100.0% | 100.0% |

| Ingredient | Ex. 86 | Ex. 87 | Ex. 88 | Ex. 89 | Ex. 90 | Ex. 91 |
|---|---|---|---|---|---|---|
| Gum base | 25.5 | 25.5 | 25.5 | 25.5 | 25.5 | 25.5 |
| Glycerin | 8.0 | 8.0 | 8.0 | 2.0 | 3.0 | 2.0 |
| Sorbitol | 32.0 | 27.0 | 22.0 | 31.0 | 10.0 | 0.0 |
| Mannitol | 8.0 | 8.0 | 8.0 | 0.0 | 0.0 | 0.0 |
| Sorbitol liquid | 5.0 | 0.0 | 0.0 | 0.0 | 0.0 | 0.0 |
| Lycasin | 0.0 | 5.0 | 5.0 | 5.0 | 10.0 | 10.0 |
| Maltitol | 0.0 | 5.0 | 0.0 | 0.0 | 0.0 | 0.0 |
| Xylitol | 0.0 | 0.0 | 0.0 | 15.0 | 0.0 | 0.0 |
| Lactitol | 10.0 | 10.0 | 10.0 | 0.0 | 0.0 | 0.0 |
| Palatinit | 0.0 | 0.0 | 10.0 | 10.0 | 25.0 | 21.0 |
| Flavor | 1.5 | 1.5 | 1.5 | 1.5 | 1.5 | 1.5 |
| Allulose | 10.0 | 10.0 | 10.0 | 10.0 | 25.0 | 40.0 |
| TOTAL | 100.0% | 100.0% | 100.0% | 100.0% | 100.0% | 100.0% |

Any of the alditols can be combined with allulose and co-dried to form unique combinations, such as:

### EXAMPLE 92

Allulose and sorbitol can be dissolved in water in a ratio of 2:1 and co-dried and used in the formulas of Table 11.

### EXAMPLE 93

Allulose, sorbitol and mannitol can be dissolved in water at a ratio of 1:1:1, co-dried, and used in appropriate formulas in Table 11.

### EXAMPLE 94

Allulose, mannitol and xylitol can be dissolved in water at a ratio of 1:1:1, co-dried, and used in appropriate formulas in Table 11.

### EXAMPLE 95

Allulose, sorbitol and lactitol can be dissolved in water at a ratio of 1:1:1, co-dried, and used in appropriate formulas in Table 11.

### EXAMPLE 96

Allulose, palatinit and sorbitol can be dissolved in water at a ratio of 1:1:1, co-dried, and used in appropriate formulas in Table 11.

### EXAMPLE 97

Allulose and palatinit can be dissolved in water at a ratio of 1:1, co-dried, and used in appropriate formulas in Table 11.

### EXAMPLE 98

Allulose sorbitol, maltitol and xylitol may be blended at 25% of each ingredient and dissolved in water, co-dried, and used in appropriate formulas in Table 11.

Multiple combinations of allulose with various alditols can be made in solution to form liquid concentrates that do not need to be co-dried, such as:

### EXAMPLE 99

Allulose, sorbitol, maltitol and Lycasin brand hydrogenated starch hydrolysates may be dissolved in water at 25% of each ingredient, evaporated to a thick syrup and used in the appropriate formulas in Table 11.

### EXAMPLE 100

Allulose, xylitol, sorbitol, and Lycasin can be dissolved in water at 25% of each ingredient, evaporated to a thick syrup, and used in the formulas in Table 11.

### EXAMPLE 101

Allulose, sorbitol, lactitol and Lycasin can be dissolved in water at 25% of each ingredient, evaporated to a thick syrup, and used in the formulas in Table 11.

### EXAMPLE 102

Allulose, Lycasin and glycerin can be dissolved in water at a ratio of 1:1:1, evaporated to a thick syrup and used in the formulas in Table 11.

### EXAMPLE 103

Glycerin is added to Example 99 at a ratio of 4:1 syrup to glycerin, evaporated to a thick syrup, and used in formulas in Table 11.

### EXAMPLE 104

Glycerin is added to Example 100 at a ratio of 4:1 syrup to glycerin, evaporated to a thick syrup, and used in the formulas in Table 11.

### EXAMPLE 105

Glycerin is added to Example 101 at a ratio of 4:1 syrup to glycerin, evaporated to a thick syrup, and used in formulas in Table 11.

Other carbohydrates such as inulin, bioagave, Nutriose, indigestible dextrin, fructooligosaccharides (FOS), polydextrose, natural gums, and other polyols such as erythritol, may be substituted for any of the polyols and used in the Examples.

Multiple combinations of one or two alditols with allulose can be made by melting the allulose and alditols together at about 130°C, cooling, and grinding to form powder blends, such as:

### EXAMPLE 106

Allulose and sorbitol are blended at a 1:1 ratio and melted at 130°C. The blend is cooled, ground and used in formulas in Table 11.

### EXAMPLE 107

Allulose, sorbitol and xylitol are blended at a 1:1:1 ratio and melted at 130°C. The blend is cooled, ground and used in formulas in Table 11.

High-intensity sweeteners such as aspartame, acesulfame K, or the salts of acesulfame, cyclamate and its salts, saccharin and its salts, alitame, sucralose, thaumatin, monellin, dihydrochalcone, stevioside, glycyrrhizin, and combinations thereof may be used in any of the Examples listed in Tables 4, 5, 6, 7, 8 9, 10 and 11. Since allulose has slightly less sweetness than some of the other sugars used in sugar gum, and some of the alditols in sugar-free gum, a high-intensity sweetener may be need to obtain the proper level of sweetness.

High-intensity sweeteners may also be modified to control their release in chewing gum formulations containing allulose. This can be controlled by various methods of encapsulation, agglomeration, absorption, or a combination of methods to obtain either a fast or slow release of the sweetener. Sweetener combinations, some of which may be synergistic, may also be included in the gum formulations containing allulose.

The following examples show the use of high- intensity sweeteners in chewing gum formulations with allulose.

### EXAMPLE 108

Aspartame at a level of 0.2% may be added to any of the formulas in Tables 4 through 11 by replacing 0.2% of the allulose.

### EXAMPLE 109

Alitame at a level of 0.03% may be added to any of the formulas in Tables 4 through 11 by replacing 0.03% of the allulose.

### EXAMPLE 110

Sucralose at a level of 0.07% may be added to any of the formulas in Tables 4 through 11 by replacing 0.07% of the allulose.

### EXAMPLE 111

Thaumatin at a level of 0.02% may be added to any of the formulas in Tables 4 through 11 by replacing 0.02% of the allulose.

### EXAMPLE 112

Glycyrrhizin at a level of 0.4% may be added to any of the formulas in Tables 4 through 11 by replacing 0.4% of the allulose.

High-intensity sweeteners may also be combined with other high-intensity sweeteners, with or without encapsulation, agglomeration or absorption, and used in chewing gum according to the following examples:

### EXAMPLE 113

Aspartame and acesulfame K at a 1:1 ratio may be added to any of the formulas in Tables 4 through 11 at a level of 0.15% by replacing 0.15% of the allulose.

### EXAMPLE 114

Aspartame and alitame at a ratio of 9:1 aspartame: alitame may be added to any of the formulas in Tables 4 through 11 at a level of 0.1% by replacing 0.1% of the allulose.

### EXAMPLE 115

Aspartame and thaumatin at a ratio of 9:1 aspartame: thaumatin can be added to any of the formulas in Tables 4 through 11 at a level of 0.1% by replacing 0.1% of the allulose.

### EXAMPLE 116

Sucralose and alitame in a ratio of 3:1 sucralose: alitame can be added to any of the formulas in Tables 4 through 11 at a level of 0.5% by replacing 0.5% of the allulose.

### EXAMPLE 117

Alitame and glycyrrhizin in a ratio of 1:12 alitame: glycyrrhizin can be added to any of the formulas in Tables 4 through 11 at a level of 0.1% by replacing 0.1% of the allulose.

### EXAMPLE 118

Aspartame and glycyrrhizin in a ratio of 1:14 aspartame: glycyrrhizin can be added to any of the formulas in Tables 4 through 11 at a level of 0.3% by replacing 0.3% of the allulose.

As discussed above, Allulose ingredients that are available are crystalline allulose and allulose syrup. These materials may be used exclusively in a variety of chewing gum formulations, as in Tables 12 and 13.

**Table 12**

| **Weight Percent** | | | | | |
|---|---|---|---|---|---|
| Ingredient | Ex. 119 | Ex. 120 | Ex. 121 | Ex. 122 | Ex. 123 |
| Gum base | 19.2 | 30.5 | 35.5 | 30.5 | 30.0 |
| Glycerin | 2.0 | 2.0 | 7.0 | 0.0 | 2.0 |
| Allulose - crystalline* | 67.8 | 56.0 | 51.0 | 50.0 | 45.5 |
| Allulose - syrup* | 10.0 | 10.0 | 5.0 | 18.0 | 20.0 |
| Flavor | 1.0 | 1.5 | 1.5 | 1.5 | 2.5 |
| TOTAL | 100.0% | 100.0% | 100.0% | 100.0% | 100.0% |

| | | | | | |
|---|---|---|---|---|---|
| *Allulose crystalline and allulose syrup may also be pre-blended and coevaporated to reduce moisture. | | | | | |

**Table 13**

| **Weight Percent** | | | | | | |
|---|---|---|---|---|---|---|
| Ingredient | Ex. 124 | Ex. 125 | Ex. 126 | Ex. 127 | Ex. 128 | Ex. 129 |
| Gum base | 25.5 | 25.5 | 25.5 | 25.5 | 50.0 | 70.0 |
| Glycerin | 2.0 | 2.0 | 7.0 | 0.0 | 2.0 | 1.0 |
| Allulose - crystalline* | 51.0 | 61.0 | 51.0 | 53.0 | 45.5 | 24.0 |
| Allulose - syrup* | 20.0 | 10.0 | 15.0 | 20.0 | 0.0 | 2.0 |
| Flavor | 1.5 | 1.5 | 1.5 | 1.5 | 2.5 | 3.0 |
| TOTAL | 100.0% | 100.0% | 100.0% | 100.0% | 100.0% | 100.0% |

| | | | | | | |
|---|---|---|---|---|---|---|
| *Allulose crystalline and allulose syrup may also be pre-blended and coevaporated to reduce moisture. | | | | | | |

The formulation in Table 12 and 13 do not contain other sugars or alditols. These formulations will give unique texture and flavor attributes. These formulations may also contain high- intensity, artificial sweeteners, from about 0.02% to about 0.1% for sweeteners like alitame, thaumatin, and dihydrochalcone, and from about 0.1% to about 0.3% for sweeteners like aspartame, sucralose, acesulfame, and saccharin. The formulations in Tables 12 and 13 without the other types of sugars and alditols will also have good low caloric properties.

It should be appreciated that the compositions and methods of the present invention are capable of being incorporated in the form of a variety of embodiments, only a few of which have been illustrated and described above. The invention may be embodied in other forms without departing from its essential characteristics. The described embodiments are to be considered in all respects only as illustrative and not restrictive, and the scope of the invention, therefore, indicated by the appended claims rather than by the foregoing description. All changes which come within the meaning and range of equivalency of the claims are to be embraced within their scope.

## Claims

1. A chewing gum composition comprising:
a) 5% to 95% gum base;
b) 0.1% to 10% of a flavoring agent;
c) 5% to 95% bulk sweetener wherein the bulk sweetener is selected from sugar, dextrose, fructose, xylose, mannose, isomaltulose, sorbitol, maltitol, isomalt, mannitol, xylitol, erythritol, and lactitol and wherein a portion of the bulk sweetener comprises 1% to 50% allulose by weight of the chewing gum composition, and
wherein the chewing gum composition contains less than 5% moisture.

2. The chewing gum composition of claim 1, wherein the allulose comprises 5% to 50% of the gum composition.

3. The chewing gum composition of claim 1, wherein the allulose is in the form selected from the group consisting of crystalline allulose, amorphous allulose, allulose syrup, and mixtures thereof.

4. The chewing gum composition of claim 1, wherein the chewing gum composition is liquid filled, and the liquid filled portion comprises allulose.

5. The chewing gum composition of claim 1, wherein the bulk sweetener is combined with high potency sweeteners selected from thaumatin, aspartame, acesulfame K, sodium saccharin, glycyrrhizin, alitame, cyclamate, stevioside, dihydrochalcones, stevia, steviol glycosides, glycosylated steviolglycosides, and luo han guo.

6. The chewing gum composition of claim 1, wherein the bulk sweetener is sugar.

7. The chewing gum composition of claim 1, wherein the bulk sweetener is sorbitol.

## Patentansprüche

1. Kaugummizusammensetzung umfassend:
a) 5 % bis 95 % Gummigrundlage;
b) 0,1 % bis 10 % an einem Aromastoff;
c) 5 % bis 95 % Füllsüßstoff, wobei der Füllsüßstoff ausgewählt ist aus Zucker, Dextrose, Fructose, Xylose, Mannose, Isomaltulose, Sorbit, Maltit, Isomalt, Mannit, Xylit, Erythrit und Lactit und wobei ein Teil des Füllsüßstoffs 1 % bis 50 % Allulose bezogen auf das Gewicht der Kaugummizusammensetzung umfasst und
wobei die Kaugummizusammensetzung weniger als 5 % Feuchte enthält.

2. Kaugummizusammensetzung gemäß Anspruch 1, wobei die Allulose 5 % bis 50 % der Gummizusammensetzung umfasst.

3. Kaugummizusammensetzung gemäß Anspruch 1, wobei die Allulose in der Form ausgewählt aus der Gruppe bestehend aus kristalliner Allulose, amorpher Allulose, Allulosesirup und Gemischen davon vorliegt.

4. Kaugummizusammensetzung gemäß Anspruch 1, wobei die Kaugummizusammensetzung flüssigkeitsgefüllt ist und der flüssigkeitsgefüllte Teil Allulose umfasst.

5. Kaugummizusammensetzung gemäß Anspruch 1, wobei der Füllsüßstoff mit wirkungsstarken Süßungsmitteln ausgewählt aus Thaumatin, Aspartam, Acesulfam K, Natriumsaccharin, Glycyrrhizin, Alitam, Cyclamat, Steviosid, Dihydrochalconen, Stevia, Steviolglycosiden, glycosylierten Steviolglycosiden und Luo Han Guo kombiniert ist.

6. Kaugummizusammensetzung gemäß Anspruch 1, wobei der Füllsüßstoff Zucker ist.

7. Kaugummizusammensetzung gemäß Anspruch 1, wobei der Füllsüßstoff Sorbit ist.

## Revendications

1. Composition de chewing-gum comprenant :
a) 5 % à 95 % de gomme de base ;
b) 0,1 % à 10 % d'un agent aromatique ;
c) 5 % à 95 % d'édulcorant en vrac, dans laquelle l'édulcorant en vrac est choisi parmi le sucre, le dextrose, le fructose, le xylose, le mannose, l'isomaltulose, le sorbitol, le maltitol, l'isomalt, le mannitol, le xylitol, l'érythritol et le lactol, et dans laquelle une partie de l'édulcorant en vrac comprend 1 % à 50 % d'allulose par poids de la composition de chewing-gum, et
dans laquelle la composition de chewing-gum contient moins de 5 % d'humidité.

2. Composition de chewing-gum selon la revendication 1, dans laquelle l'allulose représente 5 % à 50 % de la composition de la gomme.

3. Composition de chewing-gum selon la revendication 1, dans laquelle l'allulose est sous la forme choisie dans le groupe constitué par l'allulose cristallin, l'allulose amorphe, le sirop d'allulose et des mélanges correspondants.

4. Composition de chewing-gum selon la revendication 1, dans laquelle la composition de chewing-gum est remplie de liquide, et la partie remplie de liquide comprend de l'allulose.

5. Composition de chewing-gum selon la revendication 1, dans laquelle l'édulcorant en vrac est combiné avec des édulcorants à forte puissance choisis parmi la thaumatine, l'aspartame, l'acésulfame K, la saccharine de sodium, la glycyrrhizine, l'alitame, le cyclamate, le stévioside, les dihydrochalcones, le stévia, les glycosides de stéviol, les stéviolglycosides glycosylés et le luo han guo.

6. Composition de chewing-gum selon la revendication 1, dans laquelle l'édulcorant en vrac est du sucre.

7. Composition de chewing-gum selon la revendication 1, dans laquelle l'édulcorant en vrac est le sorbitol.
